# EUROPÄISCHE PATENTSCHRIFT

(11) **EP 2 131 987 B1**
(45) Veröffentlichungstag und Bekanntmachung des Hinweises auf die Patenterteilung: **26.01.2011**
(21) Anmeldenummer: 07857019.9
(22) Anmeldetag: 20.12.2007
(51) Int. Cl.: B23F 19/10, B23F 15/00, F16D 23/02

(54) **ZAHNKANTENFRÄSVERFAHREN**
TOOTH CHAMFERING METHOD
PROCÉDÉ POUR FRAISER LES ARÊTES DE DENTS

(30) Priorität: 21.12.2006 DE 102006062400
(43) Veröffentlichungstag der Anmeldung: 16.12.2009
(73) Patentinhaber: Hoerbiger Antriebstechnik GmbH, 86956 Schongau (DE)
(72) Erfinder: THAU, Hermann, 71723 Grossbottwar (DE)
(74) Vertreter: Kitzhofer, Thomas
(86) Internationale Anmeldenummer: PCT/EP2007/011296
(87) Internationale Veröffentlichungsnummer: WO 2008/077593

(56) Entgegenhaltungen:
- EP-A- 0 994 267
- DE-A1- 10 330 474
- DE-A1- 19 700 769
- JP-A- 56 009 125
- JP-A- 60 071 116

## Beschreibung

Die vorliegende Erfindung betrifft ein Verfahren zum Zahnkantenfräsen (Anspitzen) von verzahnten Ewerkstücken wie Schaltmuffen, Synchronringen, Führungsmuffen, etc.

Zum Zahnkantenfräsen (Anspitzen) von Werkstücken werden im Stand der Technik zwei Herstellungsverfahren angewendet:

### 1.) Das taktende Verfahren

Bei diesem Verfahren wird jeder Zahn durch eine Hubbewegung pro Zahnteilung bearbeitet. Die Hubbewegung wird entweder über die Werkzeuge (Bild I z1 und z2) bzw. über das Werkstück (Bild I Z ausgeführt). Nach jeder Hubbewegung wird das Werkstück um eine Zahnteilung weiter getaktet.

### 2.) Das abwälzende Verfahren (Wälzfräsverfahren)

Hierbei drehen sich das Werkstück und Werkzeug kontinuierlich in einem definierten Übersetzungsverhältnis. D.h. wenn das Werkzeug (beim einschneidigen Werkzeug) eine Umdrehung macht, dreht sich das Werkstück um eine Zahnteilung weiter. Beim zweischneidigen Werkzeug macht das Werkzeug eine halbe Umdrehung pro Zahnteilung u.s.w.. Der Vorschub erfolgt kontinuierlich, d.h. das Werkstück macht mehrere Umdrehungen bis zur Fertigstellung der Anspitzung.

Es gibt Werkstücke, die aus Funktionsgründen vorstehende und zurückgesetzte Zähne benötigen, wobei diese Zähne generell andere Anspitzgeometrien (z.B. Winkel) haben können.

Die zurückgesetzten Zähne werden derzeit ausschließlich im taktenden Verfahren (siehe 1.) hergestellt, wobei die vorstehenden Zähne übersprungen und je nach Geometrie als Vor- oder Folgearbeitsgang (wenn keine Störkontur von den zurückgesetzten Zähnen vorliegt) wälzend oder taktend bearbeitet werden. Wenn eine Störkontur von den zurückgesetzten Zähnen vorliegt, erfolgt die Anspitzung der vorstehenden Zähne ausschließlich taktend. In diesem Fall werden die zurückgesetzten Zähne übersprungen.

Die der Erfindung zugrundeliegende Aufgabe ist es, ein verbessertes Verfahren zum Anspitzen von vorstehenden und von zurückgesetzten Zähnen eines Werkstückes anzugeben.

Diese Aufgabe wird durch ein Verfahren zum Anspitzen von vorstehenden (hohen) und von zurückgesetzten Zähnen eines Werkstückes gemäß Anspruch 1 gelöst.

Die Reihenfolge der Schritzte a) und b) ist austauschbar.

Bevorzugte Ausgestaltungen sind in den Unteransprüchen angegeben.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

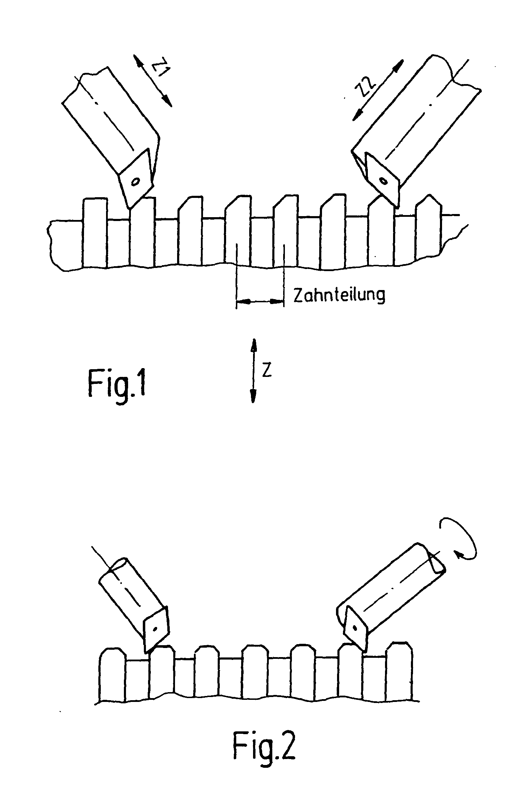

Fig. 1 ein Verfahren zum Anspitzen von Zähne nach dem Stand der Technik;
Fig. 2 ein weiteres Verfahren zum Anspitzen von Zähne nach dem Stand der Technik;

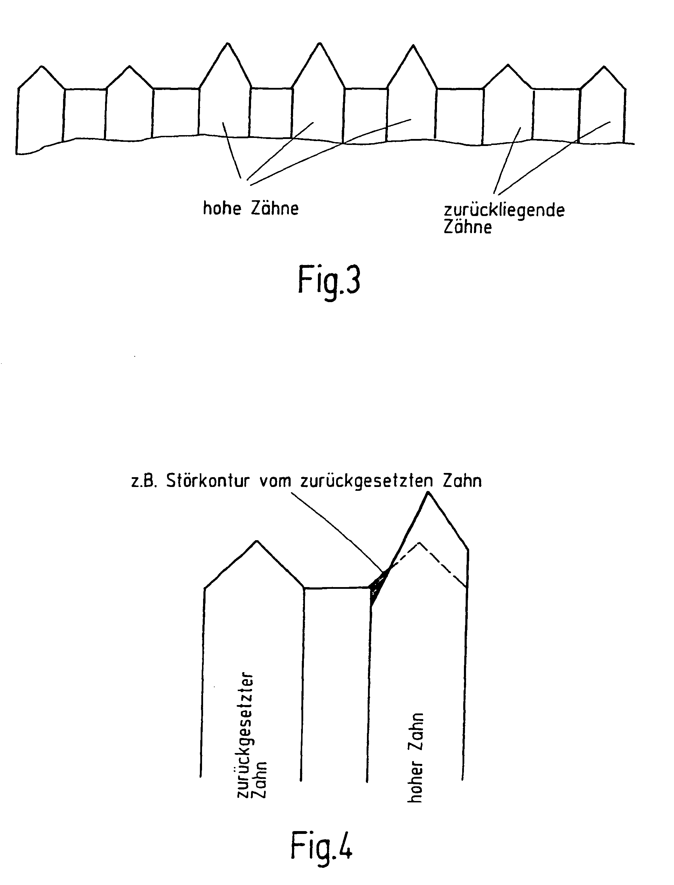

Fig. 3 ein Werkstück mit vorstehenden und mit zurückgesetzten Zähnen;
Fig. 4 ein Werkstück mit vorstehenden und mit zurückgesetzten Zähnen, wobei ein zurückgesetzter Zahn eine Störkontur für einen vorstehenden (hohen) Zahn bildet;

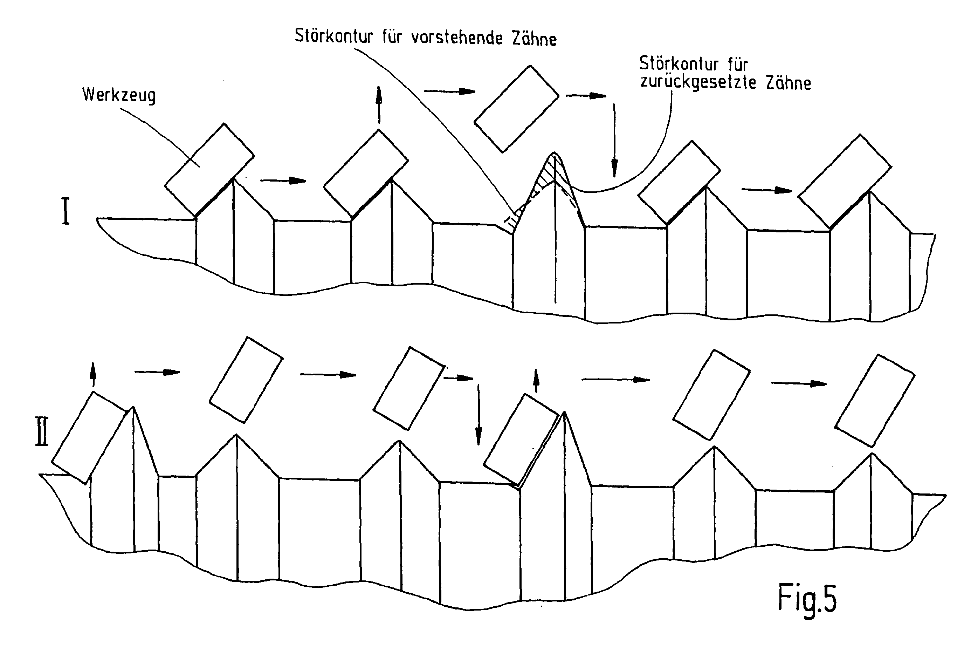

Fig. 5 in schematischer Form die zwei Wälzfräsvorgange zur Bearbeitung der zurückgesetzten Zähne (I) und der vorstehenden Zähne (II).

Sowohl zurückgesetzte als auch vorstehende Zähne werden erfindungsgemäß im wälzenden Verfahren bearbeitet. Bild 5 zeigt in schematischer Form die Relativpositionen von Werkzeug und Werkstück bei der Bearbeitung der zurückgesetzten Zähne (I) und der vorstehenden Zähne (II).

Im folgenden wird angenommen, dass ein Werkstück mit vorstehenden und mit zurückgesetzten Zähnen zu bearbeiten ist. Es ist jedoch auch denkbar, das Verfahren bei Verzanungen anbzuwenden, deren Zähne gleich lang sind, jedoch unterschiedliche Winkel besitzen, so dass sich eine Störkontur bildet.

Ein vorstehender Zahn kann eine Störkontur für einen zurückgesetzten Zahn bildet, wie es in Bild 4 gezeigt ist. Es versteht sich jedoch, dass das Verfahren genauso auf Fälle anwendbar ist, bei denen ein zurückgesetzter Zahn eine Störkontur für einen vorstehenden Zahn bildet.

Wie oben unter 2. beschrieben, drehen sich bei dem wälzenden Verfahren Werkstück und Werkzeug kontinuierlich im Übersetzungsverhältnis. Es wird beispielhaft begonnen mit der Bearbeitung von Flanken der zurückgesetzten Zähnen, Bild 5, I. Sobald in der Folge ein eine Störkontur bildener vorstehender Zahn folgt, wird das Werkzeug für die entsprechende Zahnteilung (oder mehrere Zahnteilungen, wenn mehrere vorstehende Störkonturen bildende Zähne folgen) außer Eingriff gefahren. Nach Überspringen des betroffenen Zahns (Zähne) wird das Werkzeug wieder in die Ausgangsstellung gebracht.

Sobald alle mit dieser Werkzeugausrichtung bearbeitbaren Zähne bearbeitet sind, wird das Werkzeug neu ausgerichtet und zwar so, dass sich nun die vorher eine Störkontur bildenden Zähne bearbeiten lassen (Bild 5, II). Diese werden wiederum im wälzenden Verfahren bearbeitet, wobei dann, wenn ein zurückgesetzter Zahn eine Störkontur bildet, das Werkzeug wiederum außer Eingriff gefahren und nach Überspringen des betreffenden Zahns (Zähne) wieder in die Ausgangsstellung gebracht wird, so dass letztlich alle Zähne im wälzenden Verfahren bearbeitet werden können.

Das Fahren aus der Störkontur (und zurück) kann durch alle für den Prozess benötigten Linear- bzw. Drehachsen erfolgen, also durch Werkstückachse(n) und/oder Werkzeugachse(n).

## Patentansprüche

1. Verfahren zum Anspitzen der Verzahnung eines Werkstückes durch Wälzfräsen, wobei die Verzahnung erste Zähne und zweite Zähne aufweist, die in einer ersten Richtung sich zumindest teilweise abwechselnd angeordnet sind, wobei wenigstens ein zweiter Zahn für einen ersten Zahn eine Störkontur für das Wälzfräsverfahren bildet, mit den Schritten:
a) Anspitzen von Flanken der ersten Zähne durch das Wälzfräsverfahren, bei dem sich ein Werkzeug um eine Achse dreht, die schräg zu der ersten Richtung ausgerichtet ist und bei dem zwischen dem Werkzeug und dem Werkstück koordiniert hierzu eine zahnteilungsweise Relativbewegung eingerichtet wird, wobei im Bereich des eine Störkontur bildenden zweiten Zahns eine Relativbewegung zwischen dem Werkzeug und dem Werkstück in einer Richtung erfolgt, die transversal in bezug auf die erste Richtung ausgerichtet ist, um diesen Zahn zu überspringen, und
b) Anspitzen von Flanken der zweiten Zähne durch das Wälzfräsverfahren.

2. Verfahren nach Anspruch 1, wobei dann, wenn beim Anspitzen der zweiten Zähne durch einen ersten Zahn eine Störkontur gebildet ist, im Schritt b) im Bereich dieses Zahns eine Relativbewegung zwischen dem Werkzeug und dem Werkstück in einer Richtung erfolgt, die transversal in bezug auf die erste Richtung ausgerichtet ist, um diesen Zahn zu überspringen.

## Claims

1. A method of sharpening the toothing of a workpiece by hobbing, the toothing including first teeth and second teeth arranged in a first direction so as to alternate at least in part, at least one second tooth forming an interfering contour for a first tooth for the hobbing process, comprising the steps of:
a) sharpening of flanks of the first teeth by the hobbing method, in which a tool rotates about an axis that is oriented obliquely to the first direction, and in which a relative movement is established tooth pitch by tooth pitch in coordination therewith between the tool and the workpiece, a relative movement being performed between the tool and the workpiece in the region of the second tooth forming an interfering contour in a direction oriented transversally in relation to the first direction in order to skip this tooth, and
b) sharpening of flanks of the second teeth by the hobbing method.

2. The method according to claim 1, in which when an interfering contour is formed by a first tooth during sharpening the second teeth, a relative movement is performed in step b) between the tool and the workpiece in the region of this tooth in a direction oriented transversally in relation to the first direction in order to skip this tooth.

## Revendications

1. Procédé d'appointage de la denture d'une pièce à usiner par taillage par fraise-mère, la denture présentant des premières et des deuxièmes dents agencées au moins partiellement en alternance selon une première direction, au moins une deuxième dent formant un contour perturbateur pour une première dent pour le procédé de taillage par fraise-mère, le procédé comportant les étapes suivantes :
a) appointage de flancs des premières dents par le procédé de taillage par fraise-mère, dans lequel un outil tourne autour d'un axe orienté de manière oblique à la première direction, et dans lequel un mouvement relatif par pas de dents est réalisé de façon coordonnée à ceci entre l'outil et la pièce à usiner, un mouvement relatif étant effectué dans la zone de la deuxième dent formant un contour perturbateur entre l'outil et la pièce à usiner selon une direction orientée de façon transversale par rapport à la première direction, afin de sauter cette dent, et
b) appointage de flancs des deuxièmes dents au moyen du procédé de taillage par fraise-mère.

2. Procédé selon la revendication 1, dans lequel lorsqu'un contour perturbateur est formé par une première dent lors de l'appointage des deuxièmes dents, un mouvement relatif est effectué à l'étape b) dans la zone de cette dent entre l'outil et la pièce à usiner selon une direction orientée de façon transversale par rapport à la première direction, afin de sauter cette dent.
